# EUROPEAN PATENT APPLICATION

(11) **EP 4 841 880 A1**
(43) Date of publication of application: **18.11.2026**
(21) Application number: 25775068.7
(22) Date of filing: 25.03.2025
(51) Int. Cl.: H02M 7/06

(54) **POWER CONVERSION SYSTEM AND AIR CONDITIONER**

(30) Priority: 29.03.2024 JP 2024058034
(71) Applicant: DAIKIN INDUSTRIES, LTD., Osaka-shi, Osaka 530-0001 (JP)
(72) Inventor: DOI, Hirotaka, Osaka-Shi, Osaka 530-0001 (JP); KOYAMA, Yoshitsugu, Osaka-Shi, Osaka 530-0001 (JP); OKUZONO, Kodai, Osaka-Shi, Osaka 530-0001 (JP)
(74) Representative: Hoffmann Eitle
(86) International application number: PCT/JP2025/011664
(87) International publication number: WO 2025/205726

(57) **Abstract**

Provided is a technology capable of suppressing a common-mode noise level when performing a diagnosis related to an abnormality of a noise suppression device. For example, a power conversion system (1) according to an embodiment of the present disclosure includes a power conversion device (30) configured to drive a motor (20) with power supplied from an AC power supply (10) as a result of a switching element performing a switching operation, a noise detection means (50) configured to detect common-mode noise flowing through a path including power lines (PL1, PL2) in association with the switching operation of the switching element, and to output a detection signal, an active noise canceller (60) configured to output a compensation current or a compensation voltage to the path based on the detection signal output from the noise detection means, thereby suppressing the common-mode noise, and a control circuit (67) configured to perform a diagnosis related to an abnormality of the active noise canceller (60) based on a signal related to a state of the common-mode noise when the switching operation that does not cause rotation of the motor (20) is performed by the power conversion device (30).

## Description

### TECHNICAL FIELD

The present disclosure relates to power conversion systems and the like.

### BACKGROUND ART

Conventionally, in a power conversion system including a power conversion device that drives a motor by performing a switching operation on a switching element using electric power supplied from an AC power supply through a power line, there is a known technique for suppressing common-mode noise (for example, refer to Patent Document 1).

Patent Document 1 discloses an active noise suppression technique that reduces the common-mode noise by detecting the common-mode noise and outputting, with respect to the detected common-mode noise, a compensation current or a compensation voltage to a path through which the common-mode noise flows.

### PRIOR ART DOCUMENTS

### PATENT DOCUMENTS

Patent Document 1: Japanese Patent No. 3044650

### DISCLOSURE OF THE INVENTION

### PROBLEM TO BE SOLVED BY THE INVENTION

Incidentally, there are cases where a diagnosis related to an abnormality of a noise suppression device is performed. For example, the diagnosis related to the abnormality is performed by determining whether or not the common-mode noise is appropriately suppressed.

However, for example, in a case where the diagnosis related to the abnormality of the noise suppression device is performed during a normal operation of a load device, such as a motor and the like, the load device may be operated as usual in a state where there is an abnormality or signs of abnormality are present in the noise suppression device. For this reason, the common-mode noise is not appropriately suppressed, and as a result, the common-mode noise may flow out to other equipment connected to the power conversion system.

One object of the present disclosure is to provide a technology capable of suppressing a common-mode noise level when performing a diagnosis related to an abnormality of a noise suppression device.

### MEANS OF SOLVING THE PROBLEM

According to a first aspect of the present disclosure, a power conversion system includes:
a power conversion device coupled to an AC power supply and a motor through a power line and configured to drive the motor with power supplied from the AC power supply by causing a switching element to perform a switching operation;
a detection means for detecting common-mode noise flowing through a path including the power line in association with the switching operation of the switching element, and outputting a detection signal;
a noise suppression device configured to output a compensation current or a compensation voltage to the path based on the detection signal output from the detection means, thereby suppressing the common-mode noise; and
a first circuit configured to perform a diagnosis related to an abnormality of the noise suppression device based on a signal related to a state of the common-mode noise when the switching operation that does not cause rotation of the motor is performed by the power conversion device.

According to this aspect, the power conversion system can suppress the noise level of the common-mode when performing the diagnosis related to the abnormality of the noise suppression device.

According to a second aspect of the present disclosure, based on the first aspect described above, the signal related to the state of the common-mode noise may be the detection signal output from the detection means, or a signal derived from the detection signal.

According to a third aspect of the present disclosure, based on the first or second aspect described above:
the noise suppression device may include the first circuit, and
the first circuit may determine whether or not a condition related to the diagnosis is satisfied using the signal related to the state of the common-mode noise when the switching operation that does not cause rotation of the motor is performed by the power conversion device, and perform the diagnosis based on a determination result of the first circuit.

According to a fourth aspect of the present disclosure, based on the first or second aspect described above:
the noise suppression device may include a second circuit,
the power conversion device may include the first circuit,
the second circuit may determine whether or not a condition related to the diagnosis is satisfied using the signal related to the state of the common-mode noise when the switching operation that does not cause rotation of the motor is performed by the power conversion device, and
the first circuit may perform the diagnosis based on a determination result of the second circuit.

According to a fifth aspect of the present disclosure, based on the first or second aspect described above:
the power conversion device may include the first circuit, and
the first circuit may determine whether or not a condition related to the diagnosis is satisfied using the signal related to the state of the common-mode noise when the switching operation that does not cause rotation of the motor is performed by the power conversion device, and perform the diagnosis based on a determination result of the first circuit.

According to a sixth aspect of the present disclosure, based on any one of the first to fifth aspects described above, the power conversion system may include:
a third circuit configured to control the power conversion device for the diagnosis to cause the switching operation that does not cause rotation of the motor to be performed by the power conversion device.

According to a seventh aspect of the present disclosure, based on any one of the first to sixth aspects described above, the power conversion device may perform the switching operation that does not cause rotation of the motor so as to apply a DC voltage to the motor.

According to an eighth aspect of the present disclosure, based on any one of the first to sixth aspects described above:
the motor may be driven by three-phase AC, and
the power conversion device may perform the switching operation that does not cause rotation of the motor so as to apply an AC voltage to two phases out of three phases to the motor.

According to a ninth aspect of the present disclosure, based on the second aspect described above, the power conversion system may include:
an amplifier circuit configured to amplify the detection signal output from the detection means, or a signal output from a filter circuit through which the detection signal passes; and
a compensation circuit configured to output the compensation current or the compensation voltage based on a signal output from the amplifier circuit,
wherein the amplifier circuit or the compensation circuit may make a degree of amplification larger when the switching operation that does not cause rotation of the motor is performed by the power conversion device than when the switching operation that causes rotation of the motor is performed by the power conversion device.

According to a tenth aspect of the present disclosure, based on any one of the first to ninth aspects described above, the power conversion system may include:
a filter circuit through which the detection signal output from the detection means passes and which removes a specific frequency component;
an amplifier circuit configured to amplify a signal output from the filter circuit; and
a compensation circuit configured to output the compensation current or the compensation voltage based on a signal output from the amplifier circuit.

According to an eleventh aspect of the present disclosure, based on the second aspect described above, the power conversion system may include:
a filter circuit through which the detection signal output from the detection means passes and configured to remove a specific frequency component;
an amplifier circuit configured to amplify a signal output from the filter circuit; and
a compensation circuit configured to output the compensation current or the compensation voltage based on a signal output from the amplifier circuit, and
wherein the signal derived from the detection signal output from the detection means may be a signal output from the filter circuit, a signal output from the amplifier circuit, or a signal representing the compensation current or the compensation voltage output from the compensation circuit.

According to a twelfth aspect of the present disclosure, based on any one of the first to eleventh aspects described above, a wide bandgap semiconductor may be used for the switching element.

According to a thirteenth aspect of the present disclosure, an air conditioner may include the power conversion system according to any one of the first to twelfth aspects described above.

### EFFECTS OF THE INVENTION

According to the above-described aspects, it is possible to suppress the common-mode noise level when performing a diagnosis related to an abnormality of a noise suppression device.

### BRIEF DESCRIPTION OF THE DRAWINGS

[FIG. 1] FIG. 1 is a diagram illustrating an example of a power conversion system.
[FIG. 2] FIG. 2 is a sequence diagram illustrating a first example of an operation of the power conversion system.
[FIG. 3] FIG. 3 is a sequence diagram illustrating a second example of the operation of the power conversion system.
[FIG. 4] FIG. 4 is a sequence diagram illustrating a third example of the operation of the power conversion system.
[FIG. 5] FIG. 5 is a diagram illustrating an example of a refrigerant circuit of an air conditioner.

### MODE OF CARRYING OUT THE INVENTION

Hereinafter, embodiments will be described with reference to the drawings.

### [Configuration of Power Conversion System]

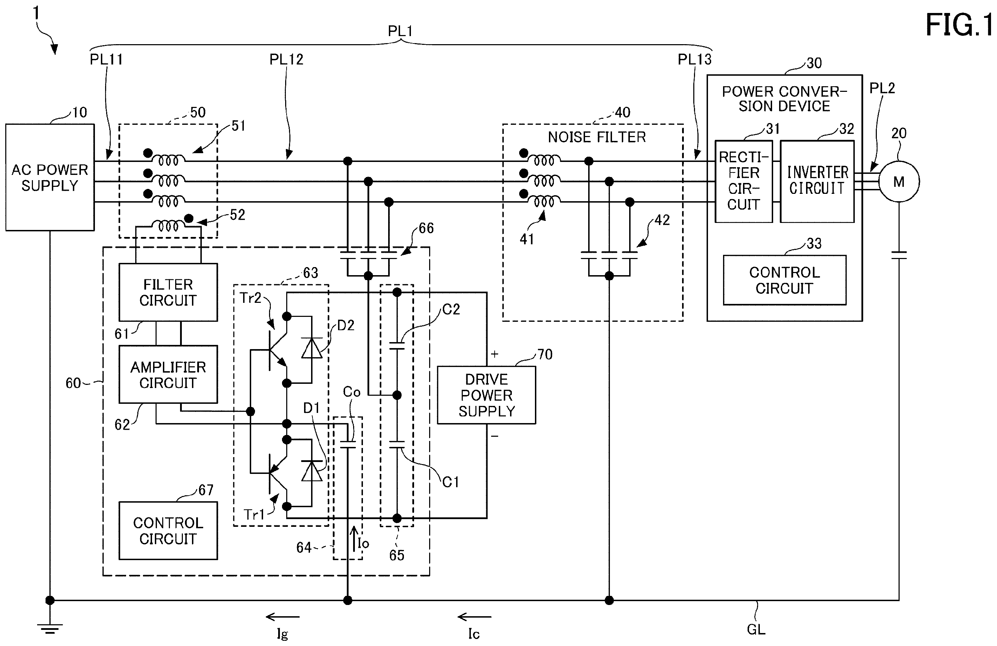

A configuration example of a power conversion system 1 according to the present embodiment will be described with reference to FIG. 1.

FIG. 1 is a diagram illustrating an example of the power conversion system 1.

As illustrated in FIG. 1, the power conversion system 1 drives a motor 20 using power supplied from an AC power supply 10.

The AC power supply 10 supplies AC power to the power conversion system 1. In this example, the AC power supply 10 supplies three-phase AC power of R-phase, S-phase, and T-phase to the power conversion system 1.

The motor 20 is driven by the three-phase AC power output from the power conversion system 1. For example, the motor 20 is a direct current (DC) brushless motor. Further, the motor 20 may be a motor driven by other three-phase AC power.

The power conversion system 1 includes a power line PL1, a power line PL2, a power conversion device 30, a noise filter 40, a noise detection means 50, an active noise canceller 60, and a drive power supply 70.

The power line PL1 electrically connects between the AC power supply 10 and the power conversion device 30 by three power lines of R-phase, S-phase, and T-phase. The power line PL1 includes power lines PL11 to PL13.

The power line PL2 electrically connects between the power conversion device 30 and the motor 20 by three power lines of U-phase, V-phase, and W-phase.

The power line PL11 connects between the AC power supply 10 and a coil 51 by respective three power lines of R-phase, S-phase, and T-phase. The power line PL12 connects between the coil 51 and a common-mode choke coil 41 of the noise filter 40 by respective three power lines of R-phase, S-phase, and T-phase. The power line PL13 connects between the common-mode choke coil 41 and the power conversion device 30 by respective three power lines of R-phase, S-phase, and T-phase.

The power conversion device 30 drives the motor 20 by converting the AC power supplied through the power line PL1 into three-phase AC power of a predetermined frequency and a predetermined voltage, and outputting the three-phase power to the motor 20 through the power line PL2.

For example, the power conversion device 30 includes a rectifier circuit 31 and an inverter circuit 32, and a control circuit 33.

The rectifier circuit 31 converts the three-phase AC power of R-phase, S-phase, and T-phase supplied through the power line PL13 into direct current power, and outputs the DC power to a direct current (DC) link (also referred to as a "DC link"). For example, the rectifier circuit 31 is a three-phase full-wave rectifier circuit using diodes.

The inverter circuit 32 converts the DC power input from the DC link between the rectifier circuit 31 and the inverter circuit 32 into three-phase AC power of a predetermined frequency and a predetermined voltage, specifically, AC power of U-phase, V-phase, and W-phase, and outputs the three-phase AC power. For example, the inverter circuit 32 includes a switching element, and converts the DC power into the three-phase AC power of the predetermined frequency and the predetermined voltage by a switching operation of the switching element, and outputs the three-phase AC power to the power line PL2.

For example, the switching element is an insulated gate bipolar transistor (IGBT), a metal-oxide-semiconductor field-effect transistor (MOSFET), a high electron mobility transistor (HEMT), or the like. For example, the switching element is configured using silicon (Si) as a main material. Further, the switching element may be configured using a wide-bandgap semiconductor material as the main material. For example, the wide-bandgap semiconductor material is silicon carbide (SiC), gallium nitride (GaN), gallium oxide (Ga₂O₃), carbon (diamond: C), or the like. Moreover, the inverter circuit 32 may include a freewheeling diode made of a semiconductor connected in parallel with the switching element, in addition to the switching element.

The control circuit 33 performs a control process related to the power conversion device 30.

In addition, the control circuit 33 may perform other processes related to the power conversion system 1.

For example, the control circuit 33 performs a process for diagnosis related to an abnormality of the active noise canceller 60 (hereinafter, "abnormality diagnosis"). For example, the abnormality diagnosis includes diagnosis of the presence or absence of the abnormality. Further, the abnormality diagnosis may include diagnosis of the presence or absence of signs of the abnormality and diagnosis of a degree of abnormality (abnormality level).

Functions of the control circuit 33 may be implemented solely by hardware (circuit) between the hardware and software, or may be implemented by a combination of hardware (for example, an integrated circuit (IC)) and software. For example, in the latter case, the control circuit 33 is mainly configured of a microcontroller including a central processing unit (CPU), a memory device, an auxiliary storage device, an interface for input/output, and the like.

The functions of the control circuit 33 may be implemented by a plurality of circuits. For example, among the functions of the control circuit 33, a function of performing a process for abnormality diagnosis of the active noise canceller 60 may be implemented by a diagnostic circuit separate from the control circuit 33.

The noise filter 40 is a passive noise suppression device that suppresses common-mode noise.

The common-mode noise occurs along with the switching operation of the switching element of the inverter circuit 32. Specifically, the common-mode noise occurs due to noise in association with the switching operation of the switching element leaking to the ground GL through a stray capacitance of the motor 20 or a stray capacitance between a non-illustrated switching element of the power conversion device 30 and a heat sink.

The noise filter 40 includes the common-mode choke coils 41 and Y-capacitors 42.

The common-mode choke coil 41 acts as an inductor with respect to a common-mode noise current (common-mode current) flowing through the power line PL1 to suppress the noise current.

The Y-capacitors 42 have a function of returning the common-mode current flowing out to the ground GL to the inverter circuit 32 as a noise source. The Y-capacitors 42 have one end connected to the power line PL13 and the other end connected to the ground GL.

The ground GL is grounded. For example, the ground GL is a casing of an apparatus including the power conversion system 1. Further, the ground GL may be a dedicated reference potential line.

The noise detection means 50 detects the common-mode noise current (common-mode current) or a noise voltage (common-mode voltage). For example, as illustrated in FIG. 1, the noise detection means 50 detects the common-mode current of the power line PL1. The noise detection means 50 includes a primary-side circuit including the coils 51, and a secondary-side circuit including a coil 52.

The coil 51 is provided in each of the R-phase, S-phase, and T-phase of the power line PL1.

The coil 52 is provided so as to be magnetically coupled to the coils 51. The coil 52 outputs a detection signal corresponding to the common-mode noise of the power line PL1.

The coils 51 and the coil 52 are wound around cores of the same magnetic material, and are arranged so as to have polarities opposite to one another, as indicated by "•" in FIG. 1. The cores of the magnetic material wound with the coils 51 and 52 are toroidal cores, for example, and the magnetic material is ferrite or permalloy, for example. For example, when a current flows to the right through the coil 51 in the FIG. 1, a current flows to the left through the coil 52. That is, the polarity indicated by "•" in FIG. 1 is a polarity according to a direction in which the current flows into.

For example, when a common-mode current flows through the coil 51, a current proportional to the common-mode current is induced in the coil 52. Accordingly, the coils 51 and 52 function as a current detection transformer that detects the common-mode current. Further, the noise detection means 50 may detect the common-mode noise of the ground GL.

The active noise canceller 60 outputs a compensation current or a compensation voltage for suppressing common-mode noise to the power line PL1, the power line PL2, or the ground GL, based on the detection signal output from the coil 52 of the noise detection means 50. The active noise canceller 60 includes a filter circuit 61, an amplifier circuit 62, a compensation circuit 63, an output section 64, a power supply circuit 65, coupling capacitors 66, and a control circuit 67.

The filter circuit 61 passes a signal from which a specific frequency component is removed from the detection signal output from the coil 52, and the signal output from the filter circuit 61 is input to the amplifier circuit 62.

The amplifier circuit 62 amplifies the signal output from the filter circuit 61. For example, the amplifier circuit 62 includes an operational amplifier. A signal output from the amplifier circuit 62 is input to the compensation circuit 63.

For example, a power supply voltage of the operational amplifier is 2/3 of a DC link voltage Vdc of the power conversion circuit 30C or less. This is because a voltage Vcom of a common-mode noise source (specifically, a potential of a neutral point of the motor 20, which is generated when the motor 20 is driven by the inverter circuit 32) varies in 1/3 increments, and when the power supply voltage of the operational amplifier 62 is in a range of ±1/3 of the DC link voltage Vdc, the common-mode noise caused by the switching operation of the inverter circuit 32 can be canceled without taking into consideration a relationship between the voltage Vcc and an impedance.

The signal output from the amplifier circuit 62 is a signal representing a waveform of the compensation current or the compensation voltage, and is input to the compensation circuit 63. The signal representing the waveform of the compensation current or the compensation voltage refers to a signal that indicates an amplitude and a phase for each frequency in the waveform of the compensation current or the compensation voltage output from the compensation circuit 63. For example, the signal representing the waveform of the compensation current or the compensation voltage output from the amplifier circuit 62 is a current or voltage waveform signal having the same phase for each frequency and a small amplitude with respect to the waveform of the compensation current or the compensation voltage output from the compensation circuit 63.

The compensation circuit 63 amplifies the signal output from the amplifier circuit 62, and outputs a compensation current or a compensation voltage. The compensation circuit 63 includes transistors Tr1 and Tr2, and diodes D1 and D2.

The transistor Tr1 is connected between one end of the drive power supply 70 and an output capacitor Co of the output section 64. The transistor Tr2 is connected between the other end of the drive power supply 70 and the output capacitor Co of the output section 64.

As illustrated in FIG. 1, in this example, the transistor Tr1 is a PNP type, the transistor Tr2 is an NPN type, and the transistors Tr1 and Tr2 have mutually opposite polarities. Accordingly, the transistors Tr1 and Tr2 constitute a push-pull circuit, and the push-pull circuit functions as an amplifier.

Bases of the transistors Tr1 and Tr2 are connected to one end of the coil 52 via the amplifier circuit 62 and the filter circuit 61, and an interconnection node between the transistors Tr1 and Tr2 is connected to the other end of the coil 52 via the amplifier circuit 62 and the filter circuit 61. Accordingly, the transistors Tr1 and Tr2 perform mutually opposite operations.

The diodes D1 and D2 are respectively connected in anti-parallel with the transistors Tr1 and Tr2 to protect the transistors Tr1 and Tr2.

The output section 64 outputs the compensation current or the compensation voltage output from the compensation circuit 63 to a path through which the common-mode current flows. The output section 64 includes the output capacitor Co.

The output capacitor Co has one end connected to the interconnection node between the transistors Tr1 and Tr2 of the compensation circuit 63, and the other end connected to the ground GL.

The power supply circuit 65 is connected to the drive power supply 70. The power supply circuit 65 includes capacitors C1 and C2.

The capacitors C1 and C2 are connected in series. The series connection of the capacitors C1 and C2 is connected in parallel with the drive power supply 70 and the compensation circuit 63. Further, a midpoint between the capacitors C1 and C2 is connected to the coupling capacitors 66.

The coupling capacitors 66 each have one end connected to the power line PL12 and the other end connected to the midpoint between the capacitors C1 and C2.

The control circuit 67 performs a control process related to the active noise canceller 60.

In addition, the control circuit 67 may perform a process for abnormality diagnosis of the active noise canceller 60.

Functions of the control circuit 67 may be implemented solely by hardware (circuit) between the hardware and software, or may be implemented by a combination of hardware (for example, an integrated circuit) and software. For example, in the latter case, the control circuit 67 is mainly configured of a microcontroller including a CPU, a memory device, an auxiliary storage device, an interface for input/output, and the like.

The functions of the control circuit 67 may be implemented by a plurality of circuits. For example, among the functions of the control circuit 67, a function of performing the process for abnormality diagnosis of the active noise canceller 60 may be implemented by a diagnostic circuit separate from the control circuit 67.

The drive power supply 70 supplies DC driving power to the active noise canceller 60.

The drive power supply 70 may be a DC power supply capable of independently supplying DC power to the active noise canceller 60, or may be a capacitor that uses a DC voltage of the DC link between the rectifier circuit 31 and the inverter circuit 32 of the power conversion circuit 30C as the power supply, for example.

### [Operation of Active Noise Canceller]

Next, an operation of the active noise canceller 60 will be described with reference to FIG. 1.

Hereinafter, for the sake of simplicity, a description in this example will be made by ignoring a suppression effect on a common-mode current Ic by the noise filter 40.

The noise detection means 50 detects the common-mode noise of the power line PL1, and drives the transistors Tr1 and Tr2 via the filter circuit 61 and the amplifier circuit 62. Specifically, when the detection signal output from the coil 52 of the noise detection means 50 is input to the bases of the transistors Tr1 and Tr2 via the filter circuit 61 and the amplifier circuit 62, the detection signal is amplified by the transistors Tr1 and Tr2.

In a case where the common-mode current Ic flows in a direction of an arrow in FIG. 1, the transistor Tr1 is turned on. In this case, the compensation current Io is supplied from the drive power supply 70, and flows from a positive terminal of the drive power supply 70 to a current path connected to a negative terminal of the drive power supply 70, through the capacitor C2, the coupling capacitors 66, the AC power supply 10, the output capacitor Co, and the transistor Tr1. Hence, a reduced common-mode current Ig, in which a compensation current Io is subtracted from the common-mode current Ic, flows to the AC power supply 10.

Further, in a case where the common-mode current Ic flows in a direction opposite to the direction of the arrow in FIG. 1, the transistor Tr2 is turned on. In this case, the compensation current Io is supplied from the drive power supply 70, and flows from the positive terminal of the drive power supply 70 to a current path connecting to the negative terminal of the drive power supply 70, through the transistor Tr2, the output capacitor Co, the AC power supply 10, the coupling capacitors 66, and the capacitor C1. That is, the compensation current Io flows in the direction opposite to the direction of the arrow in FIG. 1. Hence, the reduced common-mode current Ig, in which the compensation current Io is subtracted from the common-mode current Ic, flows to the AC power supply 10 in the direction opposite to the direction of the arrow in FIG. 1.

Accordingly, the active noise canceller 60 can suppress the common-mode current Ig flowing to the AC power supply 10 by outputting the compensation current Io to the path through which the common-mode current Ic flows. For this reason, the active noise canceller 60 can suppress a situation where the common-mode noise current flows out to a peripheral device through the AC power supply 10 to affect the peripheral device, for example.

### [First Example of Operation of Power Conversion System]

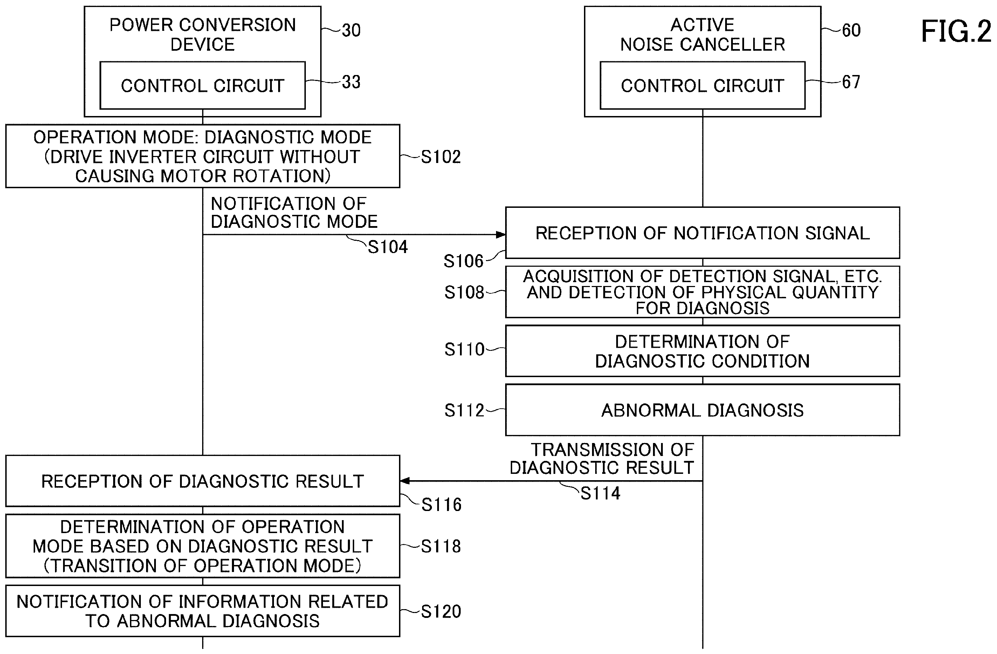

Next, a first example of an operation of the power conversion system 1 related to the abnormality diagnosis of the active noise canceller 60 will be described, with reference to FIG. 2.

FIG. 2 is a sequence diagram illustrating the first example of the operation of the power conversion system 1.

As illustrated in FIG. 2, in step S102, the control circuit 33 of the power conversion device 30 sets an operation mode of the power conversion device 30 to a diagnostic mode for abnormality diagnosis of the active noise canceller 60 at a predetermined timing. The predetermined timing is predefined as a timing different from the normal operation timing of the motor 20. The predetermined timing is, for example, upon startup or shutdown of the motor 20 or a device or system including the motor 20. The shutdown of the motor 20 or the device driven by the motor 20 refers to a time when the motor 20 or the device driven by the motor 20 transitions from an operating state to a shutdown state.

The diagnostic mode is an operation mode in which the inverter circuit 32 is caused to perform a switching operation without causing rotation of the motor 20. For example, in the diagnostic mode, the control circuit 33 causes the inverter circuit 32 to perform the switching operation so as to apply a DC voltage to the motor 20. In addition, in the diagnostic mode, the control circuit 33 may cause the inverter circuit 32 to perform the switching operation so as to apply an AC voltage to two phases out of the three phases of the U-phase, V-phase, and W-phase of the motor 20. Thus, the control circuit 33 can cause the inverter circuit 32 to perform the switching operation without rotating the motor 20.

In addition, other functions may operate simultaneously according to the diagnostic mode performed at the predetermined timing. For example, the control circuit 33 positions a rotor of the motor 20 according to transitioning to the diagnostic mode and causing the inverter circuit 32 to perform the switching operation, so as to apply the DC voltage to the motor 20. In addition, in a case where the motor 20 drives a compressor 113 which will be described later, the control circuit 33 may heat a refrigerant or oil by heat that is generated in accordance with causing the inverter circuit 32 to perform the switching operation so as to apply the AC voltage to two phases out of the three phases of the motor 20. Moreover, the control circuit 33 may raise a temperature of the switching element and a peripheral member thereof to suppress condensation according to transitioning to the diagnostic mode and causing the inverter circuit 32 to perform the switching operation so as to apply the AC voltage to two phases out of the three phases of the motor 20. Further, the control circuit 33 may generate pulsation in the DC link of the power conversion device 30 caused by an AC frequency of the AC power supply 10 according to transitioning to the diagnostic mode and causing the inverter circuit 32 to perform the switching operation so as to apply the AC voltage to two phases out of the three phases of the motor 20. Accordingly, the control circuit 33 can determine the state of the AC power supply 10, based on various detection values during pulsation of the DC link.

In addition, as the predetermined timing, when a timing comes to cause the inverter circuit 32 to perform the switching operation so as not to cause rotation of the motor 20 to operate another function, the control circuit 33 may transition to the diagnostic mode. For example, upon startup of the motor 20 or the like, when a timing comes to perform the positioning of the rotor, the control circuit 33 transitions to the diagnostic mode. Moreover, upon startup of the compressor 113, when a condition requiring preheating of the refrigerant or oil is satisfied, the control circuit 33 may transition to the diagnostic mode. Further, in a stopped state of the power conversion device 30, when a condition under which condensation may occur on the switching element or the peripheral member thereof is satisfied, the control circuit 33 may transition to the diagnostic mode. In addition, when a timing comes to determine the state of the AC power supply 10, the control circuit 33 may transition to the diagnostic mode.

When the process of step S102 is completed, the control circuit 33 proceeds to step S104.

In step S104, the control circuit 33 transmits a signal, representing a notification of transition of the operation mode of the power conversion device 30 to the diagnostic mode, to the control circuit 67 of the active noise canceller 60 through a predetermined communication line.

In step S106, the control circuit 67 of the active noise canceller 60 receives the signal transmitted from the control circuit 33 of the power conversion device 30 in step S104.

When the process of step S106 is completed, the control circuit 67 proceeds to step S108.

In step S108, the control circuit 67 acquires at least one of the detection signal output from the coil 52 of the noise detection means 50 or a signal derived from the detection signal, and detects a physical quantity for diagnosis.

The signal derived from the detection signal output from the coil 52 includes, for example, a signal output from the filter circuit 61, a signal output from the amplifier circuit 62, a signal representing the compensation current or the compensation voltage output from the compensation circuit 63, a signal representing the compensation current or the compensation voltage output from the output section 64, and the like. The signal representing the compensation current or the compensation voltage includes, for example, a signal obtained by converting the compensation current or the compensation voltage into a voltage corresponding to a low voltage level, rather than the compensation current or the compensation voltage itself. In a case where a plurality of types of signals derived from the detection signal output from the coil 52 are present, signals derived from two or more types of detection signals may be acquired. Hereinafter, the type of signal acquired in step S108 may be referred to as "a signal to be diagnosed" for the sake of convenience.

The physical quantity for diagnosis is a physical quantity represented by the signal to be diagnosed. The physical quantity for diagnosis is, for example, the current or the voltage.

When the process of step S108 is completed, the control circuit 67 proceeds to step S110.

In step S110, the control circuit 67 determines whether or not a diagnostic condition related to the physical quantity for diagnosis detected in step S108 is satisfied.

The diagnostic condition represents a condition related to the abnormality diagnosis of the active noise canceller 60. For example, the diagnostic condition related to the physical quantity for diagnosis is specified for each type of signal to be diagnosed acquired in step S108, and is a condition representing whether a magnitude of the physical quantity for diagnosis is equal to or greater than a threshold value or exceeds the threshold value. In a case where the magnitude of current, voltage, or the like corresponding to the detection signal output from the coil 52 is relatively large, the common-mode noise is not appropriately suppressed, and the possibility of abnormality of the active noise canceller 60 increases.

When the process of step S110 is completed, the control circuit 67 proceeds to step S112.

In step S112, the control circuit 67 performs the abnormality diagnosis of the active noise canceller 60 based on the determination result of whether or not the diagnostic condition related to the physical quantity for diagnosis is satisfied in step S110.

For example, the control circuit 67 performs the abnormality diagnosis according to whether or not the diagnostic condition related to the physical quantity for diagnosis at a certain point in time during the diagnostic mode is satisfied. In addition, the control circuit 67 may perform the abnormality diagnosis of the active noise canceller 60 by taking into consideration additional diagnostic conditions, such as a number of times the diagnostic condition related to the physical quantity for diagnosis is satisfied, an accumulated time during which the diagnostic condition related to the physical quantity for diagnosis is satisfied, or the like, in addition to whether or not the diagnostic condition related to the physical quantity for diagnosis is satisfied. For example, the control circuit 67 performs the abnormality diagnosis of the active noise canceller 60 depending on whether or not the accumulated time or the number of times the diagnostic condition related to the physical quantity for diagnosis is satisfied during a certain period in the diagnostic mode exceeds a predetermined threshold value.

When the process of step S112 is completed, the control circuit 67 proceeds to step S114.

In step S114, the control circuit 67 transmits a diagnostic result of the abnormality diagnosis of step S112 to the control circuit 33 of the power conversion device 30 through a predetermined communication line.

In step S116, the control circuit 33 of the power conversion device 30 receives the diagnostic result transmitted in step S114.

When the process of step S116 is completed, the control circuit 33 proceeds to step S118.

In step S118, the control circuit 33 determines the operation mode of the power conversion device 30 based on the diagnostic result of the abnormality diagnosis of the active noise canceller 60, and transitions to the determined operation mode.

For example, in a case of the startup of the motor 20, when the diagnostic result of the abnormality diagnosis of the active noise canceller 60 represents normal, the control circuit 33 transitions to a normal mode for operating the motor 20 normally. On the other hand, when the diagnostic result of the abnormality diagnosis of the active noise canceller 60 represents an abnormality, the control circuit 33 transitions to an abnormal stop mode for maintaining the operation of the motor 20 in the stopped state.

When the process of step S118 is completed, the control circuit 33 proceeds to step S120.

In step S120, the control circuit 33 notifies an upper-level device of information related to the abnormality diagnosis.

The information related to the abnormality diagnosis includes, for example, information representing the diagnostic result of abnormality diagnosis, information representing whether or not the diagnostic condition is satisfied, information on signals to be diagnosed, and the like. The upper-level device is, for example, a control device that controls overall operations of a device or system driven by the motor 20, such as an air conditioner 100 which will be described later. Accordingly, the upper-level device can notify a user or an administrator of the device or system driven by the motor 20 of the information related to the abnormality diagnosis through predetermined notification means, such as an indicator, a display device, an audio output device, or the like.

When the process of step S120 is completed, a series of operations of the power conversion system 1 related to the abnormality diagnosis of the active noise canceller 60 ends.

Thus, in this example, the control circuit 67 performs the abnormality diagnosis of the active noise canceller 60 based on the detection signal of the noise detection means 50 when the switching operation of the inverter circuit 32 is performed so as not to cause rotation of the motor 20. Hence, the noise level of the common-mode noise caused by the switching operation of the inverter circuit 32 can be reduced compared to the case where the switching operation of the inverter circuit 32 associated with the normal rotation of the motor 20 is performed. For this reason, even in a case where the abnormality diagnosis of the active noise canceller 60 is performed in a state where the abnormality is present in the active noise canceller 60, influence of the common-mode noise on other equipment connected to the power conversion system 1 can be suppressed.

In addition, in this example, the power conversion system 1 can complete all of the processes of detecting the physical quantity for diagnosis, determining whether or not the diagnostic conditions related to the physical quantity for diagnosis are satisfied, and performing the abnormality diagnosis (that is, process of steps S108, S110, and S112) on the side of the active noise canceller 60. For this reason, the control circuit 33 of the power conversion device 30 only needs to take into consideration the condition for determining a subsequent operation mode according to the diagnostic result, and a degree of freedom of design of the power conversion system 1 can be increased. For example, even in a case where there are a plurality of specifications for the active noise canceller 60, the types of content output as the diagnostic result are common, and thus, the control circuit 33 of the power conversion device 30 does not need to perform a process by taking into consideration the specifications of the active noise canceller 60.

In this example, the control circuit 33 of the power conversion device 30 may wait for a diagnostic result of abnormality diagnosis to be transmitted from the control circuit 67 during the diagnostic mode, without transmitting a signal, representing the notification of transition of the operation mode of the power conversion device 30 to the diagnostic mode, to the control circuit 67 of the active noise canceller 60. In this case, the processes of steps S104 and S106 are omitted, and the control circuit 67 of the active noise canceller 60 may recognize the transition of the power conversion device 30 to the diagnostic mode by itself without relying on the notification from the control circuit 33 of the power conversion device 30, or may constantly transmit the diagnostic result without recognizing the transition to the diagnostic mode by itself, and the control circuit 33 of the power conversion device 30 may recognize the diagnostic mode and adopt the diagnostic result during the diagnostic mode.

### [Second Example of Operation of Power Conversion System]

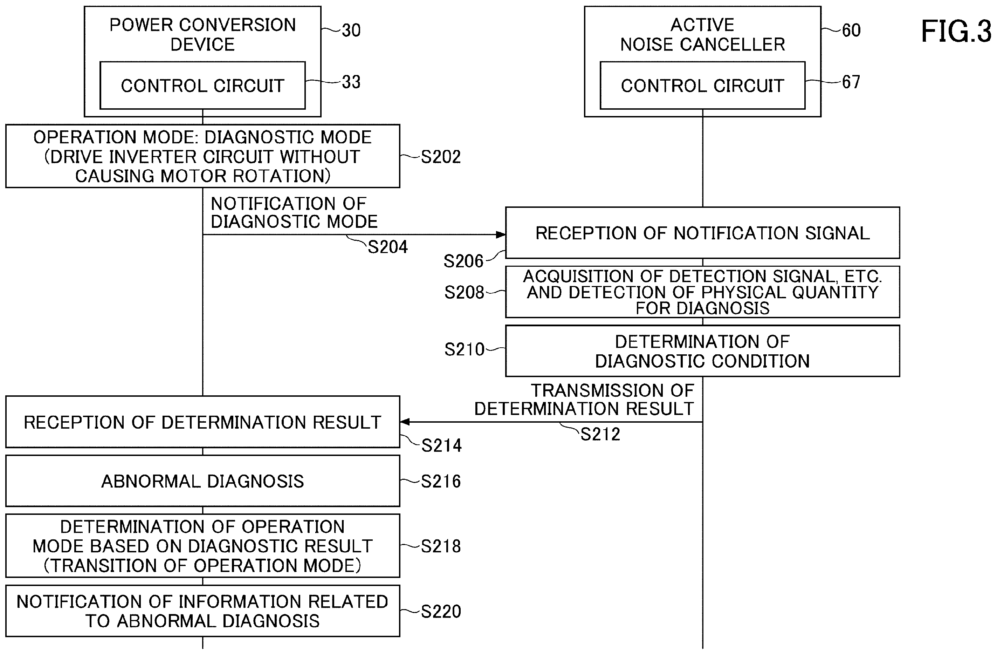

Next, a second example of the operation of the power conversion system 1 related to the abnormality diagnosis of the active noise canceller 60 will be described, with reference to FIG. 3.

In this example, a description will focus on contents that are different from the contents of the first example of FIG. 2 described above, and the description of contents that are the same as or correspond to the contents of the first example described above may be omitted.

Steps S202 to S210 are the same as steps S102 to S110 of the first example described above, and thus, a description thereof will be omitted.

When the process of step S210 is completed, the control circuit 67 of the active noise canceller 60 proceeds to step S212.

In step S212, the control circuit 67 transmits the determination result on whether or not the diagnostic condition of step S210 is satisfied to the control circuit 33 of the power conversion device 30 through a predetermined communication line.

In step S214, the control circuit 33 of the power conversion device 30 receives the determination result transmitted in step S212.

When the process of step S214 is completed, the control circuit 33 proceeds to step S216.

In step S216, the control circuit 33 performs an abnormality diagnosis of the active noise canceller 60 in the same manner as step S112 of the first example described above, based on the determination result on whether or not the diagnostic condition is satisfied, received in step S216.

When the process of step S216 is completed, the control circuit 33 proceeds to step S218.

Steps S218 and S220 are the same as steps S118 and S120 of the first example described above, and thus, a description thereof will be omitted.

When the process of step S220 is completed, a series of operations of the power conversion system 1 related to the abnormality diagnosis of the active noise canceller 60 ends.

Accordingly, in this example, the control circuit 33 performs the abnormality diagnosis of the active noise canceller 60 based on the detection signal of the noise detection means 50 when the switching operation of the inverter circuit 32 is performed so as not to cause rotation of the motor 20. Hence, the same functions and effects as those obtainable by the first example described above can be obtained.

In addition, in this example, the power conversion system 1 can cause the control circuit 67 of the active noise canceller 60 to perform the processes of detecting the physical quantity for diagnosis and determining whether or not the diagnostic condition related to the physical quantity for diagnosis is satisfied (that is, processes of steps S208 and S210). Accordingly, the control circuit 67 can achieve coordination of the processes from the process of detecting the physical quantity for diagnosis to the process of determining whether or not the diagnostic condition related to the physical quantity is satisfied. Moreover, because the process for abnormality diagnosis of the active noise canceller 60 is performed by the control circuit 33 of the power conversion device 30, the power conversion system 1 can simplify the configuration of the control circuit 67.

In this example, the control circuit 33 of the power conversion device 30 may wait for the determination result on whether or not the diagnostic condition is satisfied to be transmitted from the control circuit 67 during the diagnostic mode, without transmitting a signal, representing a notification of transition of the operation mode of the power conversion device 30 to the diagnostic mode, to the control circuit 67 of the active noise canceller 60. In this case, the processes of steps S204 and S206 are omitted, and the control circuit 67 of the active noise canceller 60 may recognize the transition of the power conversion device 30 to the diagnostic mode by itself without relying on the notification from the control circuit 33 of the power conversion device 30, or may constantly transmit the determination result without recognizing the transition of the power conversion device 30 to the diagnostic mode by itself, and the control circuit 33 of the power conversion device 30 may recognize the diagnostic mode and adopt determination result during the diagnostic mode.

### [Third Example of Operation of Power Conversion System]

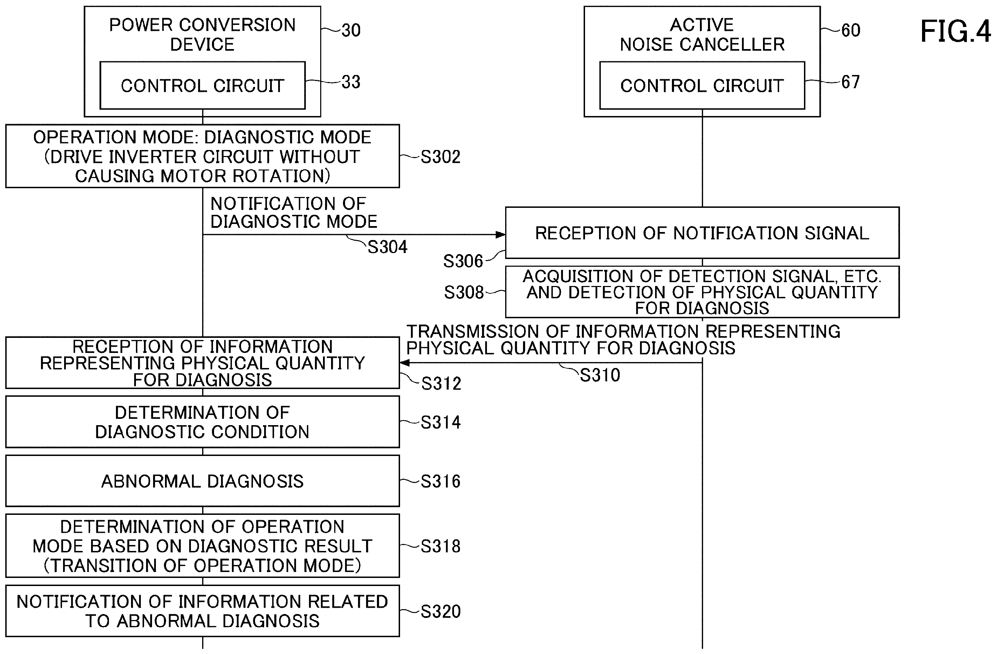

Next, a third example of operation of the power conversion system 1 related to the abnormality diagnosis of the active noise canceller 60 will be described, with reference to FIG. 4.

In this example, a description will focus on contents that are different from contents of the first example of FIG. 2 and the second example of FIG. 3 described above, and the description of contents that are the same as or correspond to the first example or the second example described above may be omitted.

Steps S302 to S308 are the same as steps S102 to S108 of the first example described above, and thus, a description thereof will be omitted.

When the process of step S308 is completed, the control circuit 67 of the active noise canceller 60 proceeds to step S310.

In step S310, the control circuit 67 transmits information representing the physical quantity for diagnosis detected in step S308 to the control circuit 33 of the power conversion device 30 through a predetermined communication line.

In step S312, the control circuit 33 of the power conversion device 30 receives the information representing the physical quantity for diagnosis transmitted in step S310.

In step S314, the control circuit 33 of the power conversion device 30 determines whether or not the diagnostic condition related to the physical quantity for diagnosis is satisfied in the same manner as step S110 of the first example described above, based on the information representing the physical quantity for diagnosis received in step S312.

When the process of step S314 is completed, the control circuit 33 proceeds to step S316.

In step S316, the control circuit 33 performs the abnormality diagnosis of the active noise canceller 60 in the same manner as step S112 of the first example described above, based on the determination result on whether or not the diagnostic condition related to the physical quantity for diagnosis is satisfied in step S314.

When the process of step S316 is completed, the control circuit 33 proceeds to step S318.

Steps S318 and S320 are the same as steps S118 and S120 of the first example described above, and thus, a description thereof will be omitted.

When the process of step S320 is completed, a series of operations of the power conversion system 1 related to the abnormality diagnosis of the active noise canceller 60 ends.

Accordingly, in this example, similar to the second example described above, the control circuit 33 performs the abnormality diagnosis of the active noise canceller 60 based on the detection signal of the noise detection means 50 when the switching operation of the inverter circuit 32 is performed so as not to cause rotation of the motor 20. Hence, the same functions and effects as those obtainable by the first example and the second example described above can be obtained.

In addition, in this example, the power conversion system 1 can cause the control circuit 33 of the power conversion device 30 to perform the processes of determining whether or not the diagnostic condition related to the physical quantity for diagnosis is satisfied and performing the abnormality diagnosis (that is, processes of steps S314 and S316). For this reason, the configuration of the control circuit 67 of the active noise canceller 60 can be simplified. In addition, the control circuit 33 can set more advanced diagnostic conditions using, for example, a microcontroller.

The control circuit 33 of the power conversion device 30 may wait for the information representing the physical quantity for diagnosis to be transmitted from the control circuit 67 during the diagnostic mode, without transmitting a signal, representing the notification of transition of the operation mode of the power conversion device 30 to the diagnostic mode, to the control circuit 67 of the active noise canceller 60. In this case, the processes of steps S304 and S306 are omitted, and the control circuit 67 of the active noise canceller 60 may recognize the transition of the power conversion device 30 to the diagnostic mode by itself without relying on the notification from the control circuit 33 of the power conversion device 30, or may constantly transmit the information representing the physical quantity for diagnosis without recognizing the transition to the diagnostic mode by itself, and the control circuit 33 of the power conversion device 30 may recognize the diagnostic mode and adopt the information during the diagnostic mode.

### [Other Examples of Power Conversion System]

Next, other examples of the power conversion system 1 will be described.

Modifications or variations may be made to the configuration and operation of the power conversion system 1 described above as appropriate. Hereinafter, examples in which modifications, variations, or the like are made to the configuration, operation, or the like of the power conversion system 1 according to the above-described embodiment will be referred to as "modifications" for the sake of convenience.

For example, in the power conversion system 1 of the above-described embodiment, the control circuit 67 may make the operation of the active noise canceller 60 different between a case where the power conversion device 30 is in the diagnostic mode and a case where the power conversion device 30 is in another operation mode causing rotation of the motor 20. For example, in the case where the power conversion device 30 is in the diagnostic mode, the control circuit 67 controls the amplifier circuit 62 such that the degree of amplification (amplification factor) of at least one of the amplifier circuit 62 or the compensation circuit 63 becomes larger than the case where the power conversion device 30 is in another operation mode causing rotation of the motor 20. Hence, it is possible to suppress erroneous diagnosis in a situation where the noise level of common-mode noise is relatively reduced due to the diagnostic mode, and a diagnostic accuracy can be improved.

In addition, in the power conversion system 1 of the above-described embodiment and modification thereof, the AC power supply 10 may supply single-phase AC power to the power conversion system 1 instead of the three-phase AC power.

Moreover, in the power conversion system 1 of the above-described embodiment and modification thereof, the power conversion circuit 30C may be provided in the DC link between the rectifier circuit 31 and the inverter circuit 32, and may include a smoothing circuit including a smoothing capacitor, a smoothing inductor, and the like.

Further, in the power conversion system 1 of the above-described embodiment and modification thereof, the functions of the control circuit 33 may be implemented by a plurality of circuits. For example, among the functions of the control circuit 33, a function of performing the process for abnormality diagnosis of the active noise canceller 60 may be implemented by a diagnostic circuit separate from the control circuit 33. In addition, a part or all of the functions of the control circuit 33 may be transferred to the outside of the power conversion device 30.

In addition, in the power conversion system 1 of the above-described embodiment and modification thereof, the noise filter 40 may be omitted.

Moreover, in the power conversion system 1 of the above-described embodiment and the modification thereof, the noise detection means 50 may apply a known method (for example, refer to Japanese Patent No. 5528543 and Japanese Patent No. 7309067) to detect the common-mode noise via a capacitor.

In addition, in the power conversion system 1 of the above-described embodiment and modification thereof, the noise detection means 50 may include the functions of the filter circuit 61. In this case, the filter circuit 61 is omitted, and a filter circuit in the noise detection means 50 outputs a detection signal from which a specific frequency component is removed, and the detection signal is input to an operational amplifier or the like of the amplifier circuit 62.

Moreover, in the power conversion system 1 of the above-described embodiment and modification thereof, the filter circuit 61 may be omitted.

Further, in the power conversion system 1 of the above-described embodiment and modification thereof, the functions of the amplifier circuit 62 may be implemented by a microcontroller. In this case, the amplifier circuit 62 is omitted, and a detection signal of the noise detection means 50 or a signal output from the filter circuit 61 is input to the microcontroller. Then, the microcontroller generates a signal representing the waveform of compensation current or the compensation voltage based on the input signal, and inputs the generated signal to the compensation circuit 63. For example, instead of the amplifier circuit 62, a microcontroller included in the control circuit 67 or provided separately from the control circuit 67 outputs a signal representing the waveform of the compensation current or the compensation voltage based on a detection signal of the noise detection means 50 or a signal output from the filter circuit 61.

In addition, in the power conversion system 1 of the above-described embodiment and modification thereof, the functions of the amplifier circuit 62 may be transferred to the outside of the active noise canceller 60. In this case, the amplifier circuit 62 is omitted. For example, a detection signal of the noise detection means 50 or a signal output from the filter circuit 61 is input to the control circuit 33 of the power conversion device 30 through a predetermined communication line. Further, the control circuit 33 generates a signal representing the waveform of the compensation current or the compensation voltage based on the input signal, and transmits the generated signal to the active noise canceller 60 through a predetermined communication line, and the signal representing the waveform of the compensation current or the compensation voltage is input to the compensation circuit 63.

Moreover, in the power conversion system 1 of the above-described embodiment and modification thereof, the diodes D1 and D2 of the compensation circuit 63 may be omitted.

Further, in the power conversion system 1 of the above-described embodiment and modification thereof, either one of the amplifier circuit 62 and the compensation circuit 63 may be omitted.

In addition, in the power conversion system 1 of the above-described embodiment and modification thereof, the output section 64 may include a resistor connected in series in addition to the output capacitor Co.

Moreover, in the power conversion system 1 of the above-described embodiment and modification thereof, the output capacitor Co of the output section 64 may be omitted. In this case, the output section 64 may connect the compensation circuit 63 to the ground GL via a resistor, or may connect the compensation circuit 63 directly to the ground GL.

Further, in the power conversion system 1 of the above-described embodiment and modification thereof, the output section 64 may be configured to output the compensation current or the compensation voltage to the power line PL12.

In addition, in the power conversion system 1 of the above-described embodiment and modifications thereof, the output section 64 may apply a known method (for example, refer to Japanese Patent No. 5528543 or Japanese Patent No. 7309067) to output the compensation current or the compensation voltage to the power line PL1 by magnetic coupling. In this case, the output section 64 includes a primary coil magnetically coupled to a harness corresponding to the power line PL1 or the ground GL, and a toroidal core wound with the primary coil, and the harness corresponding to the power line PL1 or the ground GL is inserted through the toroidal core. Moreover, a coil wound around the toroidal core may be formed in the harness corresponding to the power line PL1 or the ground GL.

Further, in the power conversion system 1 of the above-described embodiment and modification thereof, the active noise canceller 60 may be provided such that a compensation current Io flows between the DC link of the power conversion circuit 30C and the ground GL. For example, as described above, in the case where the drive power supply 70 utilizes the DC voltage of the DC link of the power conversion circuit 30C, the compensation current Io flows between the DC link and the ground GL through a power path. In this case, the noise detection means 50 may be provided so as to detect the common-mode noise of the power line PL1, or may be provided so as to detect the common-mode noise of the DC link of the power conversion circuit 30C.

In addition, in the power conversion system 1 of the above-described embodiment and modification thereof, the active noise canceller 60 may be provided so that the compensation current Io flows between the power line PL2 between the power conversion device 30 and the motor 20, and the ground GL. For example, one ends of the coupling capacitors 66 are connected to each of the power lines of U-phase, V-phase, and W-phase of the power line PL2, respectively. In this case, the noise detection means 50 may be provided so as to detect the common-mode noise of the power line PL1, or may be provided so as to detect the common-mode noise of the power line PL2.

Moreover, in the power conversion system 1 of the above-described embodiment and modification thereof, the drive power supply 70 may be included in the active noise canceller 60.

Further, in the power conversion system 1 described above, separate from the noise detection means 50, another noise detection means for abnormality diagnosis of the active noise canceller 60 may be provided. In this case, the other noise detection means detects the common-mode noise of the power line PL1, the power line PL2, or the ground GL similarly to the noise detection means 50, and the abnormality diagnosis of the active noise canceller 60 is performed based on the detection signal.

In addition, in the power conversion system 1 described above, a part or all of the functions for performing the process for abnormality diagnosis of the active noise canceller 60 may be provided outside the power conversion device 30 or the active noise canceller 60. In this case, a part or all of the functions for performing the process for abnormality diagnosis of the active noise canceller 60 may be provided outside a device or system in which the power conversion system 1 is incorporated, that is, a device or system driven by the motor 20. For example, a part or all of the process for abnormality diagnosis of the active noise canceller 60 may be performed by an external device for diagnosis provided outside the power conversion system 1 and capable of communicating with the power conversion system 1.

### [Application Example of Power Conversion System]

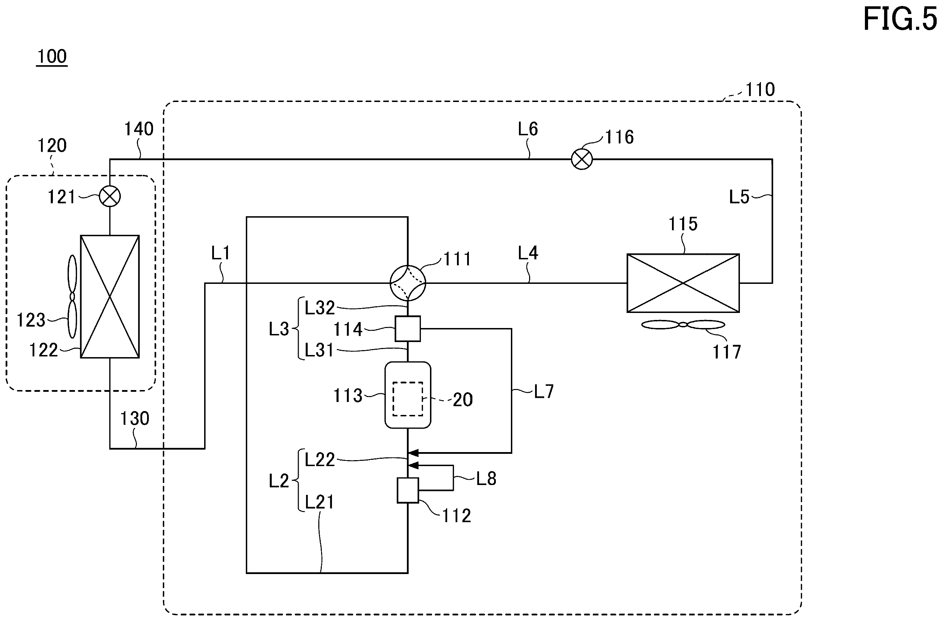

Next, an application example of the power conversion system 1 according to the present embodiment will be described with reference to FIG. 5. Specifically, an air conditioner 100 equipped with the power conversion system 1 according to the present embodiment will be described.

FIG. 5 is a diagram illustrating an example of a refrigerant circuit of the air conditioner 100.

As illustrated in FIG. 5, the air conditioner 100 includes an outdoor unit 110, an indoor unit 120, and refrigerant paths 130 and 140. The air conditioner 100 operates a refrigeration cycle configured of the outdoor unit 110, the indoor unit 120, the refrigerant paths 130 and 140, and the like, to control the temperature, humidity, and the like of a room where the indoor unit 120 is installed.

The outdoor unit 110 is arranged outside a building, which serves as a controlled object including the temperature and the like. The outdoor unit 110 is connected to one end of each of the refrigerant paths 130 and 140, sucks a refrigerant from either one of the refrigerant paths 130 and 140, and discharges the refrigerant to the other of the refrigerant paths 130 and 140.

The indoor unit 120 is arranged inside the building, which serves as the controlled object including temperature and the like. The indoor unit 120 is connected to the other end of each of the refrigerant paths 130 and 140, sucks the refrigerant from either one of the refrigerant paths 130 and 140, and discharges the refrigerant to the other of the refrigerant paths 130 and 140.

The refrigerant paths 130 and 140 are configured of pipes, for example, and connect between the outdoor unit 110 and the indoor unit 120 so that the refrigerant can circulate between the outdoor unit 110 and the indoor unit 120.

The outdoor unit 110 includes refrigerant paths L1 to L6, oil paths L7 and L8, a four-way switching valve 111, an accumulator 112, a compressor 113, an oil separator 114, an outdoor heat exchanger 115, an outdoor expansion valve 116, and a fan 117.

The refrigerant paths L1 to L6 are configured as pipes, for example.

The refrigerant path L1 connects between one end of the refrigerant path 130 outside the outdoor unit 110 and the four-way switching valve 111.

The refrigerant path L2 connects between the four-way switching valve 111 and an inlet of the compressor 113. The refrigerant path L2 includes refrigerant paths L21 and L22.

The refrigerant path L21 connects between the four-way switching valve 111 and the accumulator 112. The refrigerant path L22 connects between the accumulator 112 and the inlet of the compressor 113.

The refrigerant path L3 connects between the four-way switching valve 111 and an outlet of the compressor 113. The refrigerant path L3 includes refrigerant paths L31 and L32.

The refrigerant path L31 connects between the outlet of the compressor 113 and the oil separator 114. The refrigerant path L32 connects between the four-way switching valve 111 and the oil separator 114.

The refrigerant path L4 connects between the four-way switching valve 111 and the outdoor heat exchanger 115.

The refrigerant path L5 connects between the outdoor heat exchanger 115 and the outdoor expansion valve 116.

The refrigerant path L6 connects between one end of the refrigerant path 140 outside the outdoor unit 110 and the outdoor expansion valve 116.

The oil path L7 is configured as a pipe, for example, and is used to flow oil separated by the oil separator 114 into the refrigerant path L22, and return the oil to the compressor 113 through the refrigerant path L22.

For example, a liquid-phase refrigerant (hereinafter, "liquid refrigerant") may be dissolved in the oil passing through the oil path L7. That is, not only the oil but also the liquid refrigerant flows through the oil path L7.

The oil path L8 is configured as a pipe, for example, and is used to flow the oil including the liquid refrigerant and separated by the accumulator 112 into the refrigerant path L22, and return the oil to the compressor 113 through the refrigerant path L22.

The four-way switching valve 111 reverses a circulation flow between a case of a cooling operation and a case of a heating operation of the air conditioner 100.

During the cooling operation of the air conditioner 100, the four-way switching valve 111 connects the paths indicated by the solid line in FIG. 5. Specifically, during the cooling operation of the air conditioner 100, the four-way switching valve 111 connects between the refrigerant path L1 and the refrigerant path L2, and between the refrigerant path L3 and the refrigerant path L4.

On the other hand, in the case of the heating operation of the air conditioner 100, the four-way switching valve 111 connects the paths indicated by the dotted line in FIG. 5. Specifically, during the heating operation of the air conditioner 100, the four-way switching valve 111 connects between the refrigerant path L4 and the refrigerant path L2, and between the refrigerant path L1 and the refrigerant path L3.

The accumulator 112 separates the liquid refrigerant included in the refrigerant sucked from the refrigerant path L21, and discharges the refrigerant from which a part or all of the liquid refrigerant is removed to the refrigerant path L22. The liquid refrigerant separated by the accumulator 112 includes oil. The accumulator 112 is provided with an oil discharge port connected to the oil path L8, and the oil including the separated refrigerant flows out to the oil path L8 through the oil discharge port, and is returned to the compressor 113 through the oil path L8 and the refrigerant path L22.

The compressor 113 is driven by the motor 20, sucks the refrigerant from the refrigerant path L22, compresses the refrigerant to a high pressure, and discharges the compressed refrigerant to the refrigerant path L31. Accordingly, the power conversion system 1 can control the operation of the compressor 113 by driving the motor 20.

During the cooling operation of the air conditioner 100, the high-temperature and high-pressure refrigerant compressed by the compressor 113 flows into the outdoor heat exchanger 115 through the refrigerant path L3 and the refrigerant path L4.

On the other hand, during the heating operation of the air conditioner 100, the high-temperature and high-pressure refrigerant compressed by the compressor 113 flows out to the refrigerant path 130 outside the outdoor unit 110 through the refrigerant path L3 and the refrigerant path L1. Further, the high-temperature and high-pressure refrigerant flows into the indoor unit 120 through the refrigerant path 130.

The oil separator 114 separates oil from the refrigerant flowing in from the refrigerant path L31, and flows out the refrigerant after a part or all of the oil is separated and removed to the refrigerant path L32. In addition, the oil separator 114 is provided with an oil discharge port connected to the oil path L7, and the oil separated from the refrigerant flows out to the oil path L7 through the oil discharge port, and is returned to the compressor 113 through the oil path L7 and the refrigerant path L22.

The outdoor heat exchanger 115 performs a heat exchange between outdoor air and the refrigerant passing through the inside. Specifically, a fan 117 is provided alongside the outdoor heat exchanger 115, and the outdoor heat exchanger 115 performs a heat exchange between the outdoor air blown by the fan 117 and the refrigerant flowing through the inside.

During the cooling operation of the air conditioner 100, the outdoor heat exchanger 115 causes the high-temperature and high-pressure refrigerant compressed by the compressor 113, which flows in from the refrigerant path L4, to release heat to the outdoor air, and flows out the condensed and liquefied refrigerant (liquid refrigerant) to the refrigerant path L5.

Further, during the heating operation of the air conditioner 100, the outdoor heat exchanger 115 causes a low-temperature and low-pressure liquid refrigerant flowing in from the refrigerant path L5 to absorb heat from the outdoor air, and flows out the evaporated refrigerant to the refrigerant path L4.

During the heating operation of the air conditioner 100, the outdoor expansion valve 116 is closed to a predetermined opening degree, and depressurizes the refrigerant (liquid refrigerant) flowing in from the refrigerant path L6 to a predetermined pressure. On the other hand, during the cooling operation of the air conditioner 100, the outdoor expansion valve 116 is fully opened, and passes the refrigerant (liquid refrigerant) from the refrigerant path L5 to the refrigerant path L6. For example, the outdoor expansion valve 116 is a solenoid valve.

The indoor unit 120 includes an indoor expansion valve 121, an indoor heat exchanger 122, and a fan 123.

During the cooling operation of the air conditioner 100, the indoor expansion valve 121 is closed to a predetermined opening degree, and depressurizes the subcooled liquid refrigerant flowing in from the refrigerant path 140 to a predetermined pressure. On the other hand, during the heating operation of the air conditioner 100, the indoor expansion valve 121 is fully opened, and passes the refrigerant (liquid refrigerant) flowing out from the indoor heat exchanger 122 toward the refrigerant path 140. For example, the indoor expansion valve 121 is a solenoid valve.

The indoor heat exchanger 122 performs heat exchange between indoor air and the refrigerant passing through the inside. Specifically, by the action of the fan 123 provided in the indoor unit 120, the indoor air passes around the indoor heat exchanger 122, and promotes a heat exchange with the refrigerant inside the indoor heat exchanger 122. Further, by the action of the fan 123, the indoor air that exchanged heat with the refrigerant inside the indoor heat exchanger 122 is sent out to the outside of the indoor unit 120, whereby the indoor cooling or heating is achieved.

During the cooling operation of the air conditioner 100, the indoor heat exchanger 122 causes the low-temperature and low-pressure liquid refrigerant depressurized by the indoor expansion valve 121 to absorb heat from the indoor air, and lowers the temperature of the indoor air.

On the other hand, during the heating operation of the air conditioner 100, the indoor heat exchanger 122 causes the high-temperature and high-pressure refrigerant flowing in from the outdoor unit 110 through the refrigerant path 130 to release heat to the indoor air, and raises the temperature of the indoor air.

Thus, in this example, the power conversion system 1 according to the present embodiment is applied to the air conditioner 100 in a form mounted on the air conditioner 100.

The power conversion system 1 according to the present embodiment may be applied to a refrigeration apparatus different from the air conditioner 100.

### [Functions]

Next, the functions of the power conversion system and air conditioner according to the present embodiment will be described.

In a first aspect of the present embodiment, a power conversion system includes a power conversion device, a detection means, a noise suppression device, and a first circuit. The power conversion system is, for example, the power conversion system 1 described above. The power conversion device is, for example, the power conversion device 30 described above. The detection means is, for example, the noise detection means 50 described above. The noise suppression device is, for example, the active noise canceller 60 described above. The first circuit is the control circuit 67 or control circuit 33 described above. Specifically, the power conversion device is connected to an AC power supply and a motor through a power line, and drives the motor with power supplied from the AC power supply by causing a switching element to perform a switching operation. The AC power supply is, for example, the AC power supply 10 described above. The motor is, for example, the motor 20 described above. The power line is, for example, the power lines PL1 and PL2 described above. In addition, the detection means detects the common-mode noise flowing through a path including the power line in association with the switching operation of the switching element, and outputs a detection signal. The noise suppression device outputs the compensation current or the compensation voltage to the path based on the detection signal output from the detection means, thereby suppressing the common-mode noise. The first circuit performs a diagnosis related to an abnormality of the noise suppression device based on a signal related to a state of the common-mode noise when the switching operation that does not cause rotation of the motor is performed by the power conversion device. The signal related to the state of the common-mode noise is, for example, the detection signal of the noise detection means 50 described above or a signal derived from the detection signal. The signal related to the state of common-mode noise may be, for example, a detection signal of noise detection means provided separately from the noise detection means 50 described above, or a signal derived from the detection signal.

Accordingly, the power conversion system can suppress the common-mode noise level when performing the diagnosis related to the abnormality of the noise suppression device.

According to a second aspect of the present embodiment, based on the first aspect described above, the signal related to the state of the common-mode noise may be the detection signal output from the detection means, or a signal derived from the detection signal.

Hence, the power conversion system 1 can perform the diagnosis related to the abnormality of the noise suppression device using the detection signal of the detection means or the signal derived from the detection signal.

According to a third aspect of the present embodiment, based on the first or second aspect described above, the noise suppression device may include the first circuit. The first circuit may determine whether or not the condition related to the diagnosis is satisfied using the signal related to the state of the common-mode noise when the switching operation that does not cause rotation of the motor is performed by the power conversion device, and perform the diagnosis based on a determination result of the first circuit.

Hence, the power conversion system can complete the process for the diagnosis related to the abnormality of the noise suppression device in the noise suppression device. Accordingly, for example, even in a case where there are a plurality of specifications for the noise suppression device, the power conversion system only needs to determine the operation associated with the diagnostic result, and does not need to take into consideration the differences in the specifications. As a result, a freedom of design of the power conversion system 1 can be improved.

According to a fourth aspect of the present embodiment, based on the first or second aspect described above, the noise suppression device may include a second circuit. The power conversion device may include the first circuit. The second circuit may determine whether or not the condition related to the diagnosis is satisfied using the signal related to the state of the common-mode noise when the switching operation that does not cause rotation of the motor is performed by the power conversion device. Hence, the first circuit may perform the diagnosis based on the determination result of the second circuit.

Accordingly, the power conversion system can cause the power conversion device to perform the diagnosis related to the abnormality of the noise suppression device. Thus, for example, the configuration of the noise suppression device can be simplified compared to a case where the diagnosis related to the abnormality of the noise suppression device is performed by the noise suppression device.

According to a fifth aspect of the present embodiment, based on the first or second aspect described above, the power conversion device may include the first circuit. The first circuit may determine whether or not the condition related to the diagnosis is satisfied using the signal related to the state of the common-mode noise when the switching operation that does not cause rotation of the motor is performed by the power conversion device, and perform the diagnosis based on the determination result of the first circuit.

The power conversion system can cause the power conversion device to perform the process of determining whether or not the diagnostic condition is satisfied and performing the diagnosis related to the abnormality of the noise suppression device based on the determination result. Hence, for example, the configuration of the noise suppression device can be simplified compared to a case where the process of determining whether or not the diagnostic condition is satisfied or performing the diagnosis related to the abnormality of the noise suppression device is performed by the noise suppression device.

According to a sixth aspect of the present embodiment, based on any one of the first to fifth aspects described above, the power conversion system may include a third circuit configured to control the power conversion device for the diagnosis to cause switching operation that does not cause rotation of the motor.

The power conversion system can cause the power conversion device to perform the switching operation that does not cause rotation of the motor in order to perform the diagnosis related to the abnormality of the noise suppression device.

According to a seventh aspect of the present embodiment, based on any one of the first to sixth aspects described above, the power conversion device may perform the switching operation that does not cause rotation of the motor so as to apply a DC voltage to the motor.

The power conversion system 1 can cause the power conversion device to perform the switching operation so as not to rotate the motor.

According to an eighth aspect of the present embodiment, based on any one of the first to sixth aspects described above, the motor may be driven by three-phase AC. The power conversion device may perform the switching operation that does not cause rotation of the motor so as to apply the AC voltage to two phases out of three phases to the motor.

The power conversion system 1 can cause the power conversion device to perform the switching operation so as not to rotate the motor.

According to a ninth aspect of the present embodiment, based on the first or second aspect described above, an amplifier circuit configured to amplify the detection signal output from the detection means, or a signal output from a filter circuit through which the detection signal passes; and a compensation circuit configured to output the compensation current or compensation voltage based on a signal output from the amplifier circuit, may be provided. At least one of the amplifier circuit or the compensation circuit may make a degree of amplification larger when the switching operation that does not cause rotation of the motor is performed by the power conversion device than when the switching operation that causes rotation of the motor is performed by the power conversion device.

The power conversion system 1 can improve the accuracy of the diagnosis related to the abnormality of the noise suppression device.

According to a tenth aspect of the present embodiment, based on any one of the first to ninth aspects described above, the noise suppression device may include a filter circuit, an amplifier circuit, and a compensation circuit. The filter circuit is, for example, the filter circuit 61 described above. The amplifier circuit is, for example, the amplifier circuit 62 described above. The compensation circuit is, for example, the compensation circuit 63 described above. Specifically, the filter circuit may pass the detection signal output from the detection means and remove a specific frequency component. In addition, the amplifier circuit may amplify a signal output from the filter circuit. The compensation circuit may output the compensation current or the compensation voltage based on the signal output from the amplifier circuit.

The noise suppression device can suppress the common-mode noise of the path including the power line.

According to an eleventh aspect of the present embodiment, based on the second aspect described above, the noise suppression device may include a filter circuit, an amplifier circuit, and a compensation circuit. Specifically, the filter circuit may pass the detection signal output from the detection means and remove a specific frequency component. In addition, the amplifier circuit may amplify a signal output from the filter circuit. The compensation circuit may output the compensation current or the compensation voltage based on a signal output from the amplifier circuit. The signal derived from the detection signal output from the detection means may be at least one of a signal output from the filter circuit, a signal output from the amplifier circuit, or a signal representing the compensation current or the compensation voltage output from the compensation circuit.

The power conversion system can perform the diagnosis related to the abnormality of the noise suppression device using the signal derived from the detection signal of the detection means.

According to a twelfth aspect of the present embodiment, based on any one of the first to eleventh aspects described above, a wide bandgap semiconductor may be used for the switching element.

The power conversion system can suppress the common-mode noise level associated with the switching operation of the wide bandgap semiconductor when performing the diagnosis related to the abnormality of the noise suppression device.

According to a thirteenth aspect of the present embodiment, an air conditioner may include the power conversion system according to any one of the first to twelfth aspects described above. The air conditioner is, for example, the air conditioner 100 described above.

The power conversion system is applied to an air conditioner, and can suppress the common-mode noise during operation of the motor that drives the air conditioner.

Although the embodiments are described heretofore, it will be understood that various variations in form and details can be made without departing from the spirit and scope of the claims.

Finally, this application is based upon and claims priority to Japanese Patent Application No. 2024-058034 filed on March 29, 2024, the entire contents of which are incorporated herein by reference.

### DESCRIPTION OF THE REFERENCE NUMERALS

1: Power conversion system
10: AC power supply
20: Motor
30: Power conversion device
31: Rectifier circuit
32: Inverter circuit
33: Control circuit
40: Noise filter
50: Noise detection means
60: Active noise canceller
61: Filter circuit
62: Amplifier circuit
63: Compensation circuit
64: Output section
67: Control circuit
70: Drive power supply
100: Air conditioner
PL1: Power line
PL2: Power line
PL11: Power line
PL12: Power line
PL13: Power line

## Claims

1. A power conversion system comprising:
a power conversion device coupled to an AC power supply (10) and a motor (20) through a power line (PL1) and configured to drive the motor (20) with power supplied from the AC power supply (10) by causing a switching element to perform a switching operation;
a detection means (50) for detecting common-mode noise flowing through a path including the power line (PL1) in association with the switching operation of the switching element, and outputting a detection signal;
a noise suppression device (60) configured to output a compensation current or a compensation voltage to the path based on the detection signal output from the detection means (50), thereby suppressing the common-mode noise; and
a first circuit (33, 67) configured to perform a diagnosis related to an abnormality of the noise suppression device (60) based on a signal related to a state of the common-mode noise when the switching operation that does not cause rotation of the motor (20) is performed by the power conversion device (30).

2. The power conversion system as claimed in claim 1, wherein the signal related to the state of the common-mode noise is the detection signal output from the detection means (50), or a signal derived from the detection signal.

3. The power conversion system as claimed in claim 1 or 2, wherein:
the noise suppression device (60) includes the first circuit (67), and
the first circuit (67) determines whether or not a condition related to the diagnosis is satisfied using the signal related to the state of the common-mode noise when the switching operation that does not cause rotation of the motor (20) is performed by the power conversion device (30), and performs the diagnosis based on a determination result of the first circuit (67).

4. The power conversion system as claimed in claim 1 or 2, wherein:
the noise suppression device (60) includes a second circuit (67),
the power conversion device (30) includes the first circuit (33),
the second circuit (67) determines whether or not a condition related to the diagnosis is satisfied using the signal related to the state of the common-mode noise when the switching operation that does not cause rotation of the motor (20) is performed by the power conversion device (30), and
the first circuit (33) performs the diagnosis based on a determination result of the second circuit (67).

5. The power conversion system as claimed in claim 1 or 2, wherein:
the power conversion device (30) includes the first circuit (33), and
the first circuit (33) determines whether or not a condition related to the diagnosis is satisfied using the signal related to the state of the common-mode noise when the switching operation that does not cause rotation of the motor (20) is performed by the power conversion device (30), and performs the diagnosis based on a determination result of the first circuit (33).

6. The power conversion system as claimed in any one of claims 1 to 5, comprising:
a third circuit (33) configured to control the power conversion device (30) for the diagnosis to cause the switching operation that does not cause rotation of the motor (20) to be performed by the power conversion device (30).

7. The power conversion system as claimed in any one of claims 1 to 6, wherein the power conversion device (30) performs the switching operation that does not cause rotation of the motor (20) so as to apply a DC voltage to the motor (20).

8. The power conversion system as claimed in any one of claims 1 to 6, wherein:
the motor (20) is driven by three-phase AC power, and
the power conversion device (30) performs the switching operation that does not cause rotation of the motor (20) so as to apply an AC voltage to two phases out of three phases to the motor (20).

9. The power conversion system as claimed in claim 1 or 2, comprising:
an amplifier circuit (62) configured to amplify the detection signal output from the detection means (50), or a signal output from a filter circuit (61) through which the detection signal passes; and
a compensation circuit (63) configured to output the compensation current or the compensation voltage based on a signal output from the amplifier circuit (62),
wherein the amplifier circuit (62) or the compensation circuit (63) makes a degree of amplification larger when the switching operation that does not cause rotation of the motor (20) is performed by the power conversion device (30) than when the switching operation that causes rotation of the motor (20) is performed by the power conversion device (30).

10. The power conversion system as claimed in any one of claims 1 to 9, wherein the noise suppression device (60) includes:
a filter circuit (61) through which the detection signal output from the detection means (50) passes and which removes a specific frequency component;
an amplifier circuit (62) configured to amplify a signal output from the filter circuit (61); and
a compensation circuit (63) configured to output the compensation current or the compensation voltage based on a signal output from the amplifier circuit (62).

11. The power conversion system as claimed in claim 2, wherein the noise suppression device (60) includes:
a filter circuit (61) through which the detection signal output from the detection means (50) passes and configured to remove a specific frequency component;
an amplifier circuit (62) configured to amplify a signal output from the filter circuit (61); and
a compensation circuit (63) configured to output the compensation current or the compensation voltage based on a signal output from the amplifier circuit (62), and
the signal derived from the detection signal output from the detection means (50) is a signal output from the filter circuit (61), a signal output from the amplifier circuit (62), or a signal representing the compensation current or the compensation voltage output from the compensation circuit (63).

12. The power conversion system as claimed in any one of claims 1 to 11, wherein a wide bandgap semiconductor is used for the switching element.

13. An air conditioner comprising:
the power conversion system (1) according to any one of claims 1 to 12.
